# EUROPÄISCHE PATENTSCHRIFT

(11) **EP 3 367 777 B1**
(45) Veröffentlichungstag und Bekanntmachung des Hinweises auf die Patenterteilung: **24.06.2020**
(21) Anmeldenummer: 16800876.1
(22) Anmeldetag: 27.10.2016
(51) Int. Cl.: A01C 7/16, A01C 15/00

(54) **LANDWIRTSCHAFTLICHE VERTEILMASCHINE MIT DOSIEREINRICHTUNG**
AGRICULTURAL DISTRIBUTION MACHINE WITH DOSING DEVICE
MACHINE D'ÉPANDAGE AGRICOLE AVEC DISPOSITIF DE DOSAGE

(30) Priorität: 27.10.2015 DE 102015118355
(43) Veröffentlichungstag der Anmeldung: 05.09.2018
(73) Patentinhaber: Lemken GmbH & Co. KG, 46519 Alpen (DE)
(72) Erfinder: GEBBEKEN, Martin, 46519 Alpen (DE); BERGERFURTH, Dennis, 46459 Rees (DE); BERENDSEN, Mark, 7044 AJ Lengel (NL); GERAATS, Marcel, 41334 Nettetal (DE); GOTZEN, Christian, 41751 Viersen (DE); LUKAS, Thomas, 48683 Ahaus-Wüllen (DE); PAESSENS, Christian, 47661 Issum (DE); WERRIES, Dieter, 46519 Alpen (DE); VAN KANN, Andreas, 53949 Dahlem (DE)
(86) Internationale Anmeldenummer: PCT/DE2016/100504
(87) Internationale Veröffentlichungsnummer: WO 2017/071690

(56) Entgegenhaltungen:
- DE-A1- 1 534 269
- DE-A1- 2 214 106
- DE-A1- 4 332 160
- DE-T2- 3 851 568
- DE-U1- 8 911 839
- US-A- 2 804 998
- US-A- 2 814 421

## Beschreibung

Die Erfindung betrifft eine Dosiereinrichtung einer landwirtschaftlichen Verteilmaschine, gemäß dem Oberbegriff des Patentanspruches 1.

Zur Entnahme und Dosierung von schüttfähigem Material aus einem Behälter bedarf es eines trichterförmigen Bodens im Behälter, damit das Material entlang der Trichterschräge in eine Dosiereinrichtung, also punktförmig, einläuft. Diese Trichterform reserviert allerdings wertvollen Bauraum innerhalb einer Maschine bzw. mögliches Speichervolumen innerhalb des Behälters. Im Gegensatz dazu ist bei einem Förderschneckenaustrag die Materialentnahme im Behälter aufgrund der Schneckeneinlauflänge linienförmig, also günstiger zu Gunsten des verfügbaren Bauraumes oder des möglichen Speichervolumens. Es ist an sich bekannt, Behälter in Säwagen mit Austragsschnecken zur Förderung von Material zu versehen. Aufgrund der pulsierenden Materialabgabe von Schnecken werden diese Schneckenförderer allerdings mit nachfolgenden, weiteren Dosiervorrichtungen, wie beispielsweise Zellrädern, ausgestattet, um eine konstante und genaue Materialabgabe, wie sie insbesondere bei der Aussaat zur exakten Längs- und Querverteilung von Saatgut oder Dünger gefordert werden, zu erzielen. Die US-Offenlegung US 2004 0187 755 A1 beschreibt einen solchen Säwagen mit mehreren Förderschnecken. Eine landwirtschaftliche Verteilmaschine mit gegenläufigen Schnecken, gemäß dem Oberbegriff des Patentanspruchs 1, wird in US2804998A beschrieben. Aufgabe der Erfindung ist es, eine landwirtschaftliche Verteilmaschine bauraumverbessernd mit einer mehrfachen Schneckendosierung zu versehen, wobei die Materialabgabe und Dosiergenauigkeit verbessert wird.

Diese Aufgabe wird durch die Merkmale des kennzeichnenden Teiles des Anspruches 1 gelöst.

Durch Anordnung einer rechts und einer links drehenden Förderwendel an einer Förderschnecke, wobei die Förderwendeln Material in eine gemeinsame Auslassöffnung abgeben, an welcher sie mit ihren Enden gegeneinander weisen, wird der Materialstrom der einzelnen Förderwendeln vergleichmäßigt und genauer dosiert. Dabei kann der Behälterboden, über die Förderschneckenlänge gesehen, flacher ausgestaltet werden. Trotzdem erfolgt eine gleichmäßige Materialentnahme beidseitig der Auslassöffnung, was bei einer einseitigen Entnahme sonst zu einer Schwerpunktverlagerung des gesamten Gerätes führt.

Indem man die Enden der jeweiligen Förderwendeln, welche im Bereich der Auslassöffnung gegeneinander weisen, um die Rotationsachse der Förderschnecke, oder in deren Richtung gesehen, im Winkel zueinander versetzt anordnet, wird eine pulsierende Materialabgabe der jeweiligen rechten und linken Förderwendeln in die Auslassöffnung vergleichmäßigt oder vermittelt. Auf einem gesamten Umlaufwinkel von 360 Grad bietet sich bei zwei gegenüberliegenden Wendelenden ein rotatorischer Versatz derselben um 180 Grad vorteilhaft an.

Die Auslassöffnung der Dosiereinrichtung bildet mit der Ummantelung der Förderschnecke bzw. ihres Schneckentroges eine Berandungskontur unterhalb der Förderschnecke. Wird diese diagonal oder kurvenförmig entgegen der Schneckenwendelkontur und schräg zur aufrechten Mittelebene des Behälters, also nicht parallel, ausgeformt, erfolgt eine weitere Vergleichmäßigung der Materialabgabe durch eine jeweilige Förderwendel innerhalb einer gesamten Umdrehung derselben.

Indem man die Auslassöffnung der Förderschnecke durch eine Stegwand mit Durchbruch von dem restlichen Behältervolumen trennt, wobei die Förderschnecke durch den Durchbruch hindurch in den Behälter ragt, erfolgt ein gleichmäßiges Befüllen der Schneckenkammern mit zu förderndem Material über eine Abstreifwirkung der Stegwand. Zugleich wird ein freier Materialnachlauf wirksam verhindert. Dabei kann zum Schutz der Förderwendel oder der Stegwand der Durchbruch oder die gesamte Stegwand zumindest teilweise nachgebend oder elastisch ausgebildet werden.

Ebenso können die Förderwendeln zumindest teilweise aus einem nachgiebigen oder elastischen Material bestehen, beispielsweise Elastomer oder wendelförmig angeordneten Bürstenelementen. Denkbar sind auch nur partiell an die Förderschneckenachse befestigte Spiral- oder Helix-Elemente, beispielsweise aus Federstahl.

Unterteilt man die Förderwendeln der Förderschnecken in mehrere Teilwendeln, kann man in einem Baukastensystem verschiedene Längen, unterschiedliche Teilungen sowie ein- und mehrgängige Wendeln innerhalb der Schneckenlänge, insbesondere im Bereich der Auslassöffnung, kombinieren.

Die Förderschnecken können zum Austausch seitlich aus dem Behälterboden herausgezogen werden. Damit bei befülltem Behälter mit der Förderschnecke nicht unnötig viel Material aus dem Behälter in die Auslassöffnung gezogen wird, bietet es sich an, die Förderschnecke vorzugsweise mittig zu unterteilen und mit einer Kupplung zu versehen, etwa auf Höhe der Auslassöffnung. Somit können die Schneckenteilte rechts und links aus dem Behälterboden herausgezogen werden, ohne unnötig Material in die Auslassöffnungen zu ziehen. Die Kupplung ist beispielsweise als Klauenkupplung oder als aufgeschobene Muffe mit Mitnehmer ausgeführt.

Ordnet man mehrere Förderschnecken nebeneinander über die Behälterlänge an, so kann der Behälterboden nicht nur über seine Breite, sondern in einer zweiten Dimension auch über seine Länge flacher zugunsten mehr Behältervolumens oder weniger erforderlichen Bauraum ausgestattet werden.

Rüstet man die Förderschnecken jeweils mit einem einzelnen schalt- oder in der Drehzahl regelbaren Antrieb aus, können einzelne Materialteilströme der Förderschnecken beliebig geschaltet, kombiniert oder geregelt werden. Gedacht ist hier an ein angetriebenes Vorgelege mit einzeln schaltbaren Kupplungen je Schnecke, ebenso an regelbare Einzelantriebe, beispielsweise Hydraulik- oder Elektromotoren. Im Falle eines mechanischen Antriebes ist beispielsweise ein Bodenrad oder eine Walze denkbar.

Durch den erfindungsgemäßen Versatz im Abstand quer zur Mittelebene von zumindest einer Auslassöffnung, welcher eine Förderschnecke zugeordnet ist, ist die Anordnung mehrerer Leitungen für den Materialabtransport aus der Auslassöffnung nebeneinander auf gleicher Höhe möglich, was eine kompakte Leitungsverlegung ermöglicht.

Verbindet man die jeweiligen Auslassöffnungen über die vorgenannten Leitungen mit einer Verteileinrichtung, ist ein Ausbringgerät in aufgelöster Bauweise mit zentraler Dosierung und dezentraler Verteilung des Materials über eine große Arbeitsbreite geschaffen. Dabei erfolgt die Verteilung beispielsweise mit Streu-oder Prallöffnungen über den Boden oder über Zinken- oder Scheibenschare in den Boden.

Insbesondere durch Unterstützung einer pneumatischen Fördereinrichtung kann der Materialstrom auch ohne Eigengefälle und Schwerkraft über größere Distanzen zu den jeweiligen Verteilwerkzeugen, ebenso auch zu einem nachgeschaltem Ausbringgerät gefördert werden. Dies ermöglicht hohe Massenströme.

Führt man den Behälter druckdicht aus, in dem auch die Einlassöffnungen oder Behälterdeckel nahezu druckdicht verschlossen werden, kann kein Luftstrom durch die Auslassöffnung über eine Druckdifferenz in den Behälter entweichen. Das gesamte Druckgefälle der pneumatischen Fördereinrichtung steht somit dem Materialtransport zu. Der Förderstrom kann maximiert werden.

Verbindet man die Dosiereinrichtung mit einem nachgeschaltetem Ausbringgerät, wobei dieses über zumindest eine weitere, sekundäre Abgabeeinrichtungen verfügt, wird ein sogenanntes Seed-on-Demand-System etabliert. Dabei erfolgt verbrauchsabhängig eine Abgabe von Material aus dem Behälter in eine nachgelagerte Abgabeeinrichtung zur Fein-, Partial- oder Einzelabgabe von körnigem oder granuliertem Material wie Dünger oder Saatgut. Der Materialstrom kann dabei durch Schalten oder Regeln des Dosierschneckenantriebes anhand von Füllstands- oder Verbrauchswerten der sekundären Abgabeeinrichtung, ebenso aber auch selbstregelnd über Luftaustritts-, Überlauf- oder Begrenzungsquerschnitte innerhalb des gesamten Fördersystems erfolgen. Ebenso kann ein Druckgefälle oder Luftstrom der pneumatischen Fördereinrichtung der vorliegenden Dosiereinrichtung auch in der sekundären Abgabeeinrichtungen zu Dosier-, Vereinzelungs- und/oder Transportzwecken weiterverwendet werden.

Führt man den Behälter mit zumindest einer vorzugsweise versetzbaren oder flexiblen, inneren Trennwand aus, kann das Behältervolumen in mehrere Teilbereiche zur Aufnahme von verschiedenen Granulaten wie Dünger- oder Saatgutsorten aufgeteilt werden. Ein jeweiliges Teilvolumen wird von zumindest einer am Behälterboden angeordneten Förderschnecke entleert.

Vorzugsweise wird die Dosiereinrichtung mit ihrem Behälter als getragene Baueinheit für den Ein- oder Aufbau auf einen tragendes Fahrzeug oder Gerät konzipiert und über Schlauch- oder Rohrleitungen mit einem weiteren, separaten Gerät zur Materialausbringung verbunden. Sowohl die Dosiereinrichtung als auch das weitere Gerät zur Materialausbringung können an verschiedenen Anbauräumen eines Traktors, ebenso aber auch auf ein Fahrgestell oder ein Bodenbearbeitungsgerät angebaut oder aufgesattelt werden.

Baut man zwischen der Dosiereinrichtung mit ihrem Behälter und einem Hilfsrahmen eine Wiegeeinrichtung ein, so kann absetzig, also in Intervallen, oder kontinuierlich der dosierte Materialstrom bzw. sein Gewicht ermittelt und angezeigt oder in einer Speichereinrichtung eines Rechners abgelegt werden. Zählt man dabei die Umdrehungen der Förderschnecken und setzt diese mit dem dosierten Materialstrom ins Verhältnis, kann das gesamte System manuell oder automatisch kalibriert werden.

Da der Behälter der Dosiereinrichtung in seiner horizontalen Erstreckung sehr flach ausgebildet werden kann, können seine Seitenwände mit Bezug auf die Fahrtrichtung des tragenden Fahrzeugs konvergierend in Fahrzeugbreite abgeschrägt werden. Hierdurch wird für den Fahrzeugbediener ein größeres Sichtfeld geschaffen.

In einer speziellen Erfindungsform ist die Dosiereinrichtung mit ihrem Behälter mit einem eigenen Fahrgestell oder einer Druckrolle versehen, wodurch zumindest ein Anteil des Gerätegewichtes auf den Boden abgestützt wird und diesen in einer gewünschten Arbeitsbreite, beispielsweise der Innenspurbreite des Fahrzeuges, vorverdichtet.

Die Erfindung zeichnet sich insbesondere dadurch aus, dass durch Einsatz von Dosierschnecken mit gegenläufigen Wendeln eine Dosiereinrichtung am Behälterboden geschaffen wird, welche ohne nennenswerte Restmengen über einen Großteil der Bodenbreite Material entnimmt und pulsarm oder pulsfrei Auslassöffnungen zuführt und von denen aus die Materialabfuhr dennoch zentral unter dem Gerät erfolgt, was flexible Geräteanordnungen ermöglicht.

Weitere Einzelheiten und Vorteile des Erfindungsgegenstandes ergeben sich aus der nachfolgenden Beschreibung und den zugehörigen Zeichnungen, in denen ein Ausführungsbeispiel mit den dazu notwendigen Einzelheiten und Einzelteilen dargestellt ist. Es zeigen:
Fig.1 eine perspektivische Darstellung einer landwirtschaftlichen Verteilmaschine mit Dosiereinrichtung, aufgebauten Behälter sowie Trag- und Wiegerahmen,
Fig.2 in ähnlicher Perspektive einen Teilansicht der Förderschnecke im Behälterboden mit Auslassöffnung und
Fig.3 eine Teilansicht des Behälterboden mit darin angeordneten Förderschnecken sowie deren Antrieb.

### Figurenbeschreibung

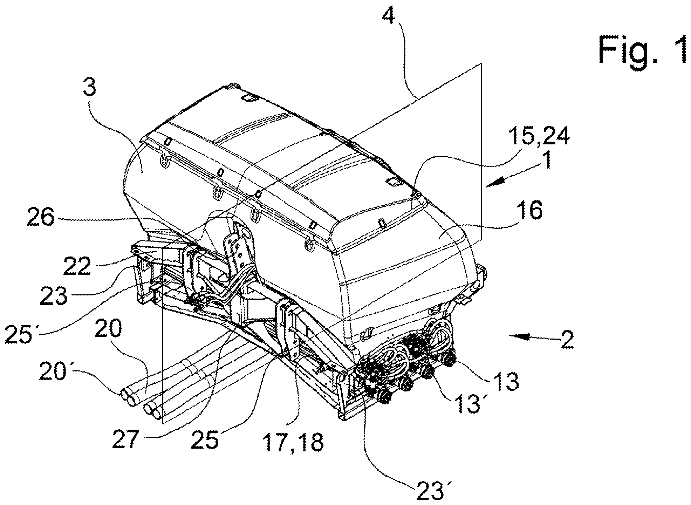

Figur 1 zeigt den generellen Aufbau der landwirtschaftlichen Verteilmaschine 1, bestehend aus einer unteren Dosiereinrichtung 2 mit Behälterboden 17 und darin quer zur Mittelebene 4 der Verteilmaschine 1 verlaufenden Förderschnecken, deren Drehantriebe 13 seitlich neben dem Behälterboden 17 angeordnet sind. A Die Mittelebene 4 unterteilt die Verteilmaschine in ihrer Breite in einen rechten und einen linken Bereich. Der Behälterboden 17 mit seinen Schneckentrögen 18 ist beispielsweise als Schweißbaugruppe ausgebildet, welche sich für die Drehlagerung die jeweiligen Förderschnecken und deren Antriebe 13 anbietet. Oberhalb des Behälterbodens 17 erstreckt sich der Behälter 3 mit einer oberen Einlassöffnung 15 zur Befüllung mit Material, welche durch einen klappbaren Deckel 24 nahezu luftdicht verschlossen wird. Im hinteren Bereich des Behälters ist ein Anbaurahmen 22 mit Aufnahmepunkten 25, 25', 26 zum Anbau an die Dreipunkthydraulik eines tragenden Schleppers vorgesehen. Dieser Anbaurahmen 22 erstreckt sich quer zur Gerätebreite und hat an seinen äußeren Enden einen jeweiligen Wiegepunkt 23, 23', welcher den Anbaurahmen 22 mit dem Behälterboden 17 verbindet. Ein weiterer Längsträger 27 des Anbaurahmens 22 erstreckt sich bis zur Vorderseite des Behälterbodens 17 und nimmt diesen mit einem dritten, nicht sichtbaren Wiegepunkt auf. Mit diesen drei Wiegepunkten 23, welche vorzugsweise als Kraftmessbolzen ausgebildet sind, erfolgt eine statische bestimmte Verwiegung der Dosiereinrichtung 2 mit aufgebautem Behälter 3 sowie dessen Inhalt, ohne dass das Wiegeergebnis beispielsweise durch Verwindungskräfte oder andere externe Einflüsse verfälscht wird. An das vordere Ende des Längsträgers 27 kann beispielsweise ein Laufsteg, ebenso ein Fahrwerk oder eine Packerwalze zur Rückverfestigung oder Aufnahme eines Teiles des Gerätegewichtes auf dem Boden angebaut werden. Etwa mittig unterhalb des Behälterbodens 17 bzw. der Schneckentröge sind seitlich zur Mittelebene 4 und nach vorne entprechend der Förderschneckenabstände die Auslassöffnungen angeordnet, von welchen sich die Förderleitungen 20,20' nach hinten erstrecken. Mit Schnellkuppeleinrichtungen können diese Förderleigungen 20,20' als flexible Schlauchleitungen in nachgelagerte Verteileinrichtungen wie Sä- oder Düngeschare, Prallteller oder Zwischenverteiler fortgeführt werden. Nicht sichtbar ist im vorderen Behälterbereich ein Druckgebläse angeordnet, welches die Förderleitungen mit einem Luftstrom zur Unterstützung des Materialtransportes beaufschlagt.

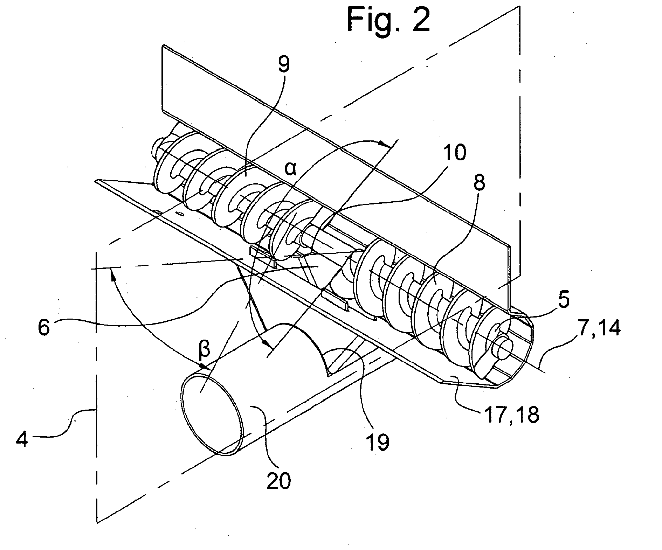

In Figur 2 ist eine Teilansicht der Förderschnecke 5 im Behälterboden 17 im Bereich der Auslassöffnung 6 zu sehen. Über die Breite der Förderschnecke 5 ist der Behälterboden 17 als Schneckentrog 18 ausgebildet, welcher sich im unteren Bereich passend um die Außenkontur der Förderschnecke 5 formt. Durch Drehung der Rotationsachse 7 entgegen dem Uhrzeigersinn fördern die beiden Schneckenwendeln 8, 9 der Förderschnecke 5 aufgrund ihrer entgegengesetzten Anordnung jeweils Material durch den Schneckentrog 18 in Richtung der Auslassöffnung 6. Die Auslassöffnung 6 ist als Durchbruch im Schneckentrog 18 ausgebildet. Dabei bildet die Berandungskontur 10 unterhalb der jeweiligen Förderwendel 8, 9 eine schräge Kante, welche etwa entgegengesetzt schräg zum Steigungswinkel der jeweiligen Förderwendeln 8, 9 ausgerichtet ist. Eine gedachte Linie durch die Förderwendelsteigung bildet mit der schrägen Kante der Berandungskontur 10 den Winkel β, welcher durch eine Ebene, welche parallel zum Mittelebene 4 verläuft, unterteilt wird. Die Berandungskontur 10, welche die Ablaufkante aus dem Schneckentrog 18 in die Auslassöffnung 6 definiert, kann mit weiteren nut-, zahn- oder wellenförmigen Ausnehmungen versehen werden, welche den jeweils durch einen Teilungsabschnitt der Förderwendel abgegebenen Materialstrom nochmals weiter vergleichmäßigt. Die Enden der beiden Förderwendeln 8, 9, welche sich auf der Rotationsachse 7 der Förderschnecke 5 gegenüber stehen, bilden, senkrecht auf die Rotationsachse 7 gesehen, einen Winkel- oder Phasenversatz α von 180 Grad, so dass mit einer Förderschneckenumdrehung von 360 Grad die beiden Förderwendeln 8, 9 jeweils phasenversetzt Material in die Auslassöffnung schieben. Durch die gegenteilige Förderrichtung der Schneckenwendeln 8, 9 auf der jeweiligen Förderschnecke 5 erfolgt selbst bei Schräglage der Förderschnecke, wie sie beispielsweise bei Hangfahrt auftritt, eine gleichmäßige Dosierung in die Auslassöffnung 6, da eine Mehrbefüllung der einen Förderwendel 8, 9 bei Schräglage der Förderschnecke 5 durch eine Minderbefüllung der jeweils gegenüberliegenden Förderwendel 9, 8 innerhalb zumindest zweier Förderschneckenumdrehung von 720 Grad kompensiert wird. Dies gilt analog für den Materialablaufschüttwinkel eines Förderabschnittes entsprechend der Teilung einer Förderwendel 8, 9 beim Erreichen der jeweiligen Berandungskontur 10 der Auslassöffnung 6. Über einen Leitblech 19 unterhalb der Auslassöffnung 6 läuft der von der Förderschnecke 5 abgegebene Materialstrom in die mit einem Luftstrom beaufschlagte Förderleitung 20. Wird die Förderleitungen 20 mit Gefälle angeordnet, kann die Materialabfuhr auch über Schwerkraft erfolgen.

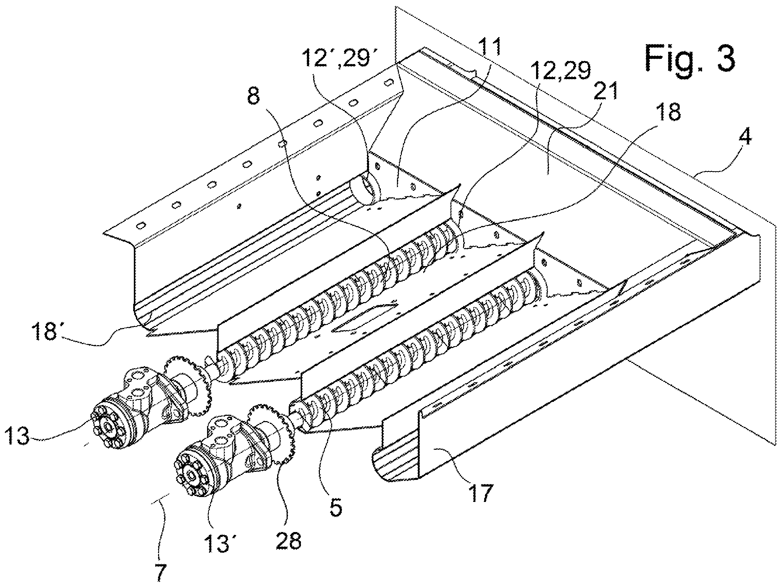

Figur 3 zeigt den freigestellten Blick von schräg vorn auf den durch die Mittelebene unterteilten Behälterboden 17. Hier sind beispielhaft vier Schneckentröge 18, 18' ausgebildet, wobei der Übersicht halber nur die beiden mittleren Tröge 18 mit einer Förderschnecke 5 sowie einem Drehantrieb 13 in Form eines Hydraulikmotors dargestellt sind. Auf der Rotationsachse 7 der Förderschnecke 5 ist ein Signalrad 28 zur Winkel- oder Drehzahlmessung der jeweiligen Förderschnecke 5 mittels eines Induktiv- oder Hallsensors angeordnet. Ebenso sind Gabellichtschranken, Winkelencoder oder anderer Verfahren zur Winkel- oder Drehzahlmessung denkbar. Anstelle eines jeweiligen Hydraulikmotors können die Förderschnecken 5 ebenso mit Elektromotoren oder Zahnrad-, Ketten- oder Riemenvorgelege, auch einzeln über eine Kupplung schaltbar, über einen wegeabhängigen Bodenantrieb oder beispielsweise eine Schlepperzapfwelle oder einer elektrischen Energieversorgung bewegt werden. Durch eine kurze Reversierung des Antriebes um etwa ein bis zwei Förderschneckenumdrehungen bei Unterbrechung des Ausbringvorganges kann ein ungewolltes Nachlaufen von Material in die Auslassöffnung, beispielsweise durch Erschütterungen des Gerätes, einfach verhindert werden. Um weiteren Bauraum einzusparen, können die Drehantriebe 13 abwechselnd rechts und links an einer jeweiligen Förderschnecke angeordnet werden. Die Förderschnecken 5 mit ihren Drehantrieben 13 können seitlich zum Mittelebene 4 aus dem Behälterboden 17 herausgezogen und beispielsweise gegen Förderschnecken anderer Teilung oder Bauart ausgetauscht werden. In der Nähe der Mittelebene 4 ist eine Dachabdeckung 21 oberhalb der jeweiligen Auslassöffnungen angeordnet. Rechts und links der Dachabdeckung 21 bzw. Zur Mittelebene 4 trennt eine Stegwand 11 den Behälterraum von dem Bereich der Auslassöffnungen unterhalb der Dachabdeckung 21, um einen freien, unbeabsichtigten Materialablauf vom Behälter in die Auslassöffnungen zu verhindern. Für eine jeweilige Förderschnecke 5 ist jeweils einen Durchbruch 12, 12' vorgesehen, welcher zugleich als Abstreifer für eine definierte Befüllung einer einzelnen Schneckenteilung der Förderwendel 8 dient. Unterstützend kann sich ein Mantelrohr 29, 29' oder eine ähnliche Abdeckung an den Durchbruch 12, 12' anschließen, wobei die Länge des Mantelrohres 29, 29' bzw. der Abdeckung zumindest eine halbe Teilung einer Förderwendel 8 beträgt. Die Einlaufschrägen des Behälterbodens 17 sind einseitig abgeschrägt und enden tangential in Drehrichtung der Förderschnecke 5 in den jeweils zugehörigen Schneckentrog 18. Die durch die Mittelebene 4 geschnittene, nur halb dargestellte Dachabdeckung 21 bildet zugleich einen Tunnel, durch den Versorgungsleitungen sowie Längsträger eines Tragrahmens hindurchgeführt werden können. Entlang der vorderen und hinteren Kante des Behälterbodens 17 sind Aufnahmebohrungen zur Befestigung der von oben angrenzenden Behälterwandung vorgesehen.

Es folgen drei Blatt mit Zeichnung.

**BEZUGSZEICHENLISTE**

| | |
|---|---|
| 1 | Landwirtschaftliche Verteilmaschine |
| 2 | Dosiereinrichtung |
| 3 | Behälter |
| 4 | Mittelebene |
| 5 | Förderschnecke |
| 6 | Auslassöffnung |
| 7 | Rotationsachse |
| 8 | Förderwendel |
| 9 | Förderwendel |
| 10 | Berandungskontur |
| 11 | Stegwand |
| 12 | Durchbruch |
| 13 | Drehantrieb |
| 14 | Mittelachse |
| 15 | Einlassöffnung |
| 16 | Außenwandung |
| 17 | Behälterboden |
| 18 | Schneckentrog |
| 19 | Leitblech |
| 20 | Leitung |
| 21 | Dachabdeckung |
| 22 | Anbaurahmen |
| 23 | Wiegepunkt. |
| 24 | Deckel |
| 25 | Aufnahmepunkt |
| 26 | Aufnahmepunkt |
| 27 | Längenträger |
| 28 | Signalrad |
| 29 | Mantelrohr |

## Patentansprüche

1. Landwirtschaftliche Verteilmaschine (1) mit einer Dosiereinrichtung (2), einen Behälter (3) zur Aufnahme von körnigem oder granuliertem Material wie Dünger oder Saatgut umfassend, wobei der Behälter (3) eine Mittelebene (4) aufweist, welche die Behälterhöhe und die Behälterlänge als Richtung vorgibt und von welcher sich die Behälterbreite quer erstreckt, wobei an der unteren Seite des Behälters (3) zumindest eine Förderschnecke (5) mit einem Drehantrieb (13) zur Entnahme von Material aus dem Behälter (3) und zur Abgabe in zumindest eine Auslassöffnung (6) angeordnet ist, wobei die Rotationsachse (7) der Förderschnecke (5) etwa senkrecht zur Mittelebene (4) des Behälters (3) ausgerichtet ist, wobei die Förderschnecke (5) über ihre Länge mit einer links drehenden und einer rechts drehenden Förderwendel (8, 9) versehen ist, wobei die Auslassöffnung (6) in dem Bereich der Förderschnecke (5) angeordnet ist, an welchem die links drehende und die rechts drehende Förderwendel (8, 9) zueinander weisen, **dadurch gekennzeichnet, dass** zumindest zwei Förderschnecken (5) einer jeweiligen Auslassöffnung (6) zugeordnet sind, wobei die Mitte zumindest einer der Auslassöffnungen (6) quer zur Mittelebene (4) des Behälters (3) versetzt und die Auslassöffnungen (6) im Abstand der Förderschnecken (5) über die Behälterlänge versetzt angeordnet sind.

2. Landwirtschaftliche Verteilmaschine nach Anspruch 1,
**dadurch gekennzeichnet,**
**dass** die zueinander weisenden Enden der links und rechts drehenden Förderwendeln (8, 9) um die Rotationsachse (7) einer Förderschnecke (5) im Winkel (a) versetzt zueinander angeordnet sind.

3. Landwirtschaftliche Verteilmaschine nach Anspruch 1 oder 2,
**dadurch gekennzeichnet,**
**dass** eine Auslassöffnung (6) unterhalb einer Förderschnecke (5) eine Berandungskontur (10) aufweist, welche nicht parallel zur Mittelebene (4) und nicht zur Wendelkontur der jeweils zugehörigen Förderwendel (8, 9) der Förderschnecke (5) ausgerichtet ist.

4. Landwirtschaftliche Verteilmaschine nach einem der vorstehenden Ansprüche,
**dadurch gekennzeichnet,**
**dass** die Auslassöffnungen (6) und der Behälter (3) durch zumindest eine Stegwand (11) voneinander räumlich getrennt sind, wobei sich die Förderschnecken (5) durch einen Durchbruch (12) der Stegwand (11) erstrecken.

5. Landwirtschaftliche Verteilmaschine nach einem der vorstehenden Ansprüche,
**dadurch gekennzeichnet,**
**dass** die Förderwendeln (8, 9) einer Förderschnecke (5) zumindest teilweise aus einem nachgiebigen oder elastischen Material bestehen.

6. Landwirtschaftliche Verteilmaschine nach einem der vorstehenden Ansprüche,
**dadurch gekennzeichnet,**
**dass** die Förderwendeln (8, 9) einer Förderschnecke (5) als Teilwendeln ausgeführt sind, welche auf die Mittelachse (14) der Förderschnecke (5) aufgeschoben sind.

7. Landwirtschaftliche Verteilmaschine nach einem der vorstehenden Ansprüche,
**dadurch gekennzeichnet,**
**dass** die Förderschnecken im mittleren Bereich teilbar oder demontierbar ausgeführt sind.

8. Landwirtschaftliche Verteilmaschine nach einem der vorstehenden Ansprüche,
**dadurch gekennzeichnet,**
**dass** mehrere Förderschnecken (5) über die Behälterlänge vor oder hintereinander angeordnet sind.

9. Landwirtschaftliche Verteilmaschine nach einem der vorstehenden Ansprüche,
**dadurch gekennzeichnet,**
**dass** mehrere Förderschnecken (5) jeweils über einen einzeln schalt- oder regelbaren Drehantrieb (13) verfügen.

10. Landwirtschaftliche Verteilmaschine nach einem der vorstehenden Ansprüche,
**dadurch gekennzeichnet,**
**dass** den jeweiligen Auslassöffnungen (6) eine Verteileinrichtung zur Ablage des körnigen oder granulierten Materials auf oder in das Erdreich zugeordnet ist.

11. Landwirtschaftliche Verteilmaschine nach Anspruch 10,
**dadurch gekennzeichnet,**
**dass** der Dosiereinrichtung (2) oder den jeweiligen Auslassöffnungen (6) eine pneumatische Fördereinrichtung zum Abtransport des körnigen oder granulierten Materiales zugeordnet ist, welches mit der Verteileinrichtung oder einem nachgeschalteten Ausbringgerät verbunden ist.

12. Landwirtschaftliche Verteilmaschine nach einem der vorstehenden Ansprüche,
**dadurch gekennzeichnet,**
**dass** der Behälter (3) eine oder mehrere nahezu druckdicht verschließbare Einlassöffnungen (15) zur Befüllung des Behälters (5) mit körnigem oder granuliertem Material aufweist.

13. Landwirtschaftliche Verteilmaschine nach Anspruch 11,
**dadurch gekennzeichnet,**
**dass** das nachgeschaltete Ausbringgerät über weitere, sekundäre Abgabeeinrichtungen verfügt, wobei durch die Dosiereinrichtung (2) eine Grob- oder Bedarfsdosierung erfolgt und durch die sekundäre Abgabeeinrichtung eine Fein-, Partial- oder Einzelabgabe von körnigem oder granuliertem Material wie Dünger oder Saatgut erfolgt.

14. Landwirtschaftliche Verteilmaschine nach einem der vorstehenden Ansprüche,
**dadurch gekennzeichnet,**
**dass** der Behälter (3) zur Aufnahme von körnigem oder granuliertem Material neben seinen Außenwandungen (16) zumindest über eine innere Trennwand verfügt, wodurch eine erste und eine weitere Materialkammer entsteht, wobei jeder Materialkammer zumindest eine Förderschnecke (5) zugeordnet ist.

15. Landwirtschaftliche Verteilmaschine nach einem der vorstehenden Ansprüche,
**dadurch gekennzeichnet,**
**dass** die landwirtschaftliche Verteilmaschine (1) mit der Dosiereinrichtung (5) als getragene Baueinheit für den Front-, Heck- oder Aufsattelanbau an ein tragendes Fahrzeug konzipiert ist und die Dosiereinrichtung (5) über zumindest teilweise elastische Schlauch- oder Rohrleitungen mit einem weiteren, separaten Gerät zur Materialausbringung verbunden ist.

## Claims

1. An agricultural distribution machine (1) with a dosing device (2), a hopper (3) for receiving grainy or granulated material such as fertiliser or seeds, wherein the hopper (3) has a centre plane (4), which predetermines the hopper height and the hopper length as direction and from which the hopper width extends transversely, wherein on the lower side of the hopper (3) at least one screw conveyor (5) with a rotary drive (13) for removing material from the hopper (3) and for dispensing into at least one outlet opening (6) is arranged, wherein the axis of rotation (7) of the screw conveyor (5) is orientated approximately perpendicularly to the centre plane (4) of the hopper (3), wherein the screw conveyor (5) over its length is equipped with an anti-clockwise-rotating and a clockwise-rotating conveyor screw (8, 9), wherein the outlet opening (6) is arranged in the region of the screw conveyor (5), on which the anti-clockwise-rotating and the clockwise-rotating conveyor screws (8, 9) face one another,
**characterized**
**in that** at least two screw conveyors (5) are assigned to a respective outlet opening (6), wherein the centre of at least one of the outlet openings (6) is arranged offset transversely to the centre plane (4) of the hopper (3) and the outlet openings (6) offset at the interval of the screw conveyors (5) over the hopper length.

2. The agricultural distribution machine according to Claim 1,
**characterized**
**in that** the ends of the anti-clockwise-rotating and clockwise-rotating conveyor screws (8, 9) facing one another are arranged about the axis of rotation (7) of a screw conveyor (5) offset relative to one another by an angle (a).

3. The agricultural distribution machine according to Claim 1 or 2,
**characterized**
**in that** an outlet opening (6) below a screw conveyor (5) comprises a rim contour (10), which is not orientated parallel to the centre plane (4) and not to the screw contour of the respective associated conveyor screws (8, 9) of the screw conveyor (5).

4. The agricultural distribution machine according to any one of the preceding claims,
**characterized**
**in that** the outlet openings (6) and the hopper (3) are spatially separated from one another by at least one web wall (11), wherein the screw conveyors (5) extend through an opening (12) of the web wall (11).

5. The agricultural distribution machine according to any one of the preceding claims,
**characterized**
**in that** the conveyor screws (8, 9) of a screw conveyor (5) consist at least partly of a flexible or elastic material.

6. The agricultural distribution machine according to any one of the preceding claims,
**characterized**
**in that** the conveyor screws (8, 9) of a screw conveyor (5) are embodied as part screws, which are slid onto the centre axis (14) of the screw conveyor (5).

7. The agricultural distribution machine according to any one of the preceding claims,
**characterized**
**in that** the screw conveyors are embodied divisible or demountable in the middle region.

8. The agricultural distribution machine according to any one of the preceding claims,
**characterized**
**in that** multiple screw conveyors (5) are arranged in front of or behind one another over the hopper length.

9. The agricultural distribution machine according to any one of the preceding claims,
**characterized**
**in that** multiple screw conveyors (5) each have an individually switchable or regulatable rotary drive (13).

10. The agricultural distribution machine according to any one of the preceding claims,
**characterized**
**in that** the respective outlet openings (6) are assigned a distribution device for placing the grainy or granulated material on or into the soil.

11. The agricultural distribution machine according to Claim 10,
**characterized**
**in that** the dosing device (2) or the respective outlet openings (6) is/are assigned a pneumatic conveying device for transporting the grainy or granulated material away, which is connected to the distribution device or a spreading device connected downstream.

12. The agricultural distribution machine according to any one of the preceding claims,
**characterized**
**in that** the hopper (3) comprises one or more inlet openings (15) that can be closed in an almost pressure-tight manner for filling the hopper (5) with grainy or granulated material.

13. The agricultural distribution machine according to Claim 11,
**characterized**
**in that** the spreading device connected downstream comprises further, secondary dispensing devices, wherein through the dosing device (2) a rough or requirement dosing takes place and by way of the secondary dispensing device, a fine, partial or individual dispensing of grainy or granulated material such as fertiliser or seeds takes place.

14. The agricultural distribution machine according to any one of the preceding claims,
**characterized**
**in that** the hopper (3) for receiving grainy or granulated material comprises, besides its outer walls (16), at least one inner partition wall, by way of which a first and a further material chamber is created, wherein each material chamber is assigned at least one screw conveyor (5).

15. The agricultural distribution machine according to any one of the preceding claims,
**characterized**
**in that** the agricultural distribution machine (1) is designed with the dosing device (5) as supported unit for the front, rear or semi-mounted attachment to a supporting vehicle and the dosing device (5) is connected via at least partly elastic hose or pipe lines to a further, separate device for material spreading.

## Revendications

1. Épandeur agricole (1), pourvu d'un système de dosage (2) comprenant un réservoir (3) destiné à recevoir une matière granuleuse ou granulée, telle qu'un fertilisant ou des semences, le réservoir (3) comprenant un plan médian (4), lequel prédéfinit en tant que direction la hauteur du réservoir et la longueur du réservoir et à partir duquel la largeur du réservoir s'étend à la transversale, sur la face inférieure du réservoir (3) étant placée au moins une vis transporteuse (5) dotée d'un entraînement en rotation (13), pour prélever de la matière dans le réservoir (3) et pour la distribuer dans au moins une ouverture de sortie (6), l'axe de rotation (7) de la vis transporteuse (5) étant orienté approximativement à la perpendiculaire du plan médian (4) du réservoir (3), la vis transporteuse (5) étant munie sur sa longueur d'une hélice transporteuse (8, 9) tournant à gauche et d'une autre tournant à droite, l'ouverture de sortie (6) étant placée dans la zone de la vis transporteuse (5) sur laquelle hélice transporteuse (8, 9) tournant à gauche et l'autre tournant à droite sont dirigées l'une vers l'autre,
**caractérisé**
**en ce qu'**au moins deux vis transporteuses (5) sont associées à une ouverture de sortie (6) respective, le centre d'au moins l'une des ouvertures de sortie (6) étant décalé à la transversale par rapport au plan médian (4) du réservoir (3) et les ouvertures de sortie (6) étant placées à un écart de la vis transporteuse (5) en étant décalées sur la longueur du réservoir.

2. Épandeur agricole selon la revendication 1,
**caractérisé**
**en ce que** les extrémités dirigées l'une vers l'autre des hélices transporteuses (8, 9) tournant à gauche et à droite sont placées en étant décalées l'une par rapport à l'autre de la valeur de l'angle (a) autour de l'axe de rotation (7) d'une vis transporteuse (5).

3. Épandeur agricole selon la revendication 1 ou 2,
**caractérisé**
**en ce qu'**une ouverture de sortie (6) comporte sous une vis transporteuse (5) un contour de bordure (10), lequel n'est pas orienté à la parallèle du plan médian (4) et pas en direction du contour d'hélice de l'hélice transporteuse (8, 9) respectivement associée de la vis transporteuse (5).

4. Épandeur agricole selon l'une quelconque des revendications précédentes,
**caractérisé**
**en ce que** les ouvertures de sortie (6) et le réservoir (3) sont physiquement séparés les uns des autres par au moins une paroi de nervures (11), les vis transporteuses (5) s'étendant à travers un ajour (12) de la paroi de nervures (11).

5. Épandeur agricole selon l'une quelconque des revendications précédentes,
**caractérisé**
**en ce que** les hélices transporteuses (8, 9) d'une vis transporteuse (5) consistent au moins partiellement dans une matière souple ou élastique.

6. Épandeur agricole selon l'une quelconque des revendications précédentes,
**caractérisé**
**en ce que** les hélices transporteuses (8, 9) d'une vis transporteuse (5) sont réalisées sous la forme d'hélices partielles, lesquelles sont emboîtées sur l'axe médian (14) de la vis transporteuse (5).

7. Épandeur agricole selon l'une quelconque des revendications précédentes,
**caractérisé**
**en ce que** les vis transporteuses sont réalisées en étant divisibles ou démontables dans la zone centrale.

8. Épandeur agricole selon l'une quelconque des revendications précédentes,
**caractérisé**
**en ce que** plusieurs vis transporteuses (5) sont placés les unes devant les autres ou derrière les autres sur la longueur du réservoir.

9. Épandeur agricole selon l'une quelconque des revendications précédentes,
**caractérisé**
**en ce que** plusieurs vis transporteuses (5) disposent respectivement d'un entraînement en rotation (13) susceptible d'être commuté ou réglé individuellement.

10. Épandeur agricole selon l'une quelconque des revendications précédentes,
**caractérisé**
**en ce qu'**aux ouvertures de sortie (6) respective est associé un système d'épandage, destiné à déposer la matière granuleuse ou granulée sur ou dans le sol.

11. Épandeur agricole selon la revendication 10,
**caractérisé**
**en ce qu'**au système de dosage (2) ou aux ouvertures de sortie (6) respectives est associé un système de transport pneumatique, destiné à évacuer la matière granuleuse ou granulée, lequel est relié avec le système d'épandage ou avec un dispositif de distribution monté en aval.

12. Épandeur agricole selon l'une quelconque des revendications précédentes,
**caractérisé**
**en ce que** le réservoir (3) comporte une ou plusieurs ouvertures d'entrée (15) fermables de manière pratiquement étanche à la pression, pour le remplissage du réservoir (5) avec de la matière granuleuse ou granulée.

13. Épandeur agricole selon la revendication 11,
**caractérisé**
**en ce que** le dispositif de distribution monté en aval dispose de plusieurs systèmes de décharge secondaires supplémentaires, le système de dosage (2) procédant à un dosage grossier ou à un dosage en fonction des besoins et le système de décharge secondaire procédant à une distribution fine, partielle ou individuelle de matière granuleuse ou granulée, telle que du fertilisant ou des semences.

14. Épandeur agricole selon l'une quelconque des revendications précédentes,
**caractérisé**
**en ce que** le réservoir (3) destiné à recevoir une matière granuleuse ou granulée dispose hormis de ses parois extérieures (16) d'au moins une paroi séparatrice intérieure, ce qui donne naissance à un premier et deuxième compartiments à matière, à chaque compartiment à matière étant associée au moins une vis transporteuse (5).

15. Épandeur agricole selon l'une quelconque des revendications précédentes,
**caractérisé**
**en ce que** l'épandeur agricole (1) est conçu avec le système de dosage (5) en tant qu'ensemble porté, destiné au montage frontal, arrière ou semi-porté sur un véhicule porteur et **en ce que** le système de dosage (5) est relié par l'intermédiaire de conduits flexibles ou rigides avec un appareil séparé supplémentaire pour la distribution de matière.
